# EUROPÄISCHE PATENTSCHRIFT

(11) **EP 1 213 272 B1**
(45) Veröffentlichungstag und Bekanntmachung des Hinweises auf die Patenterteilung: **11.07.2007**
(21) Anmeldenummer: 01128295.1
(22) Anmeldetag: 29.11.2001
(51) Int. Cl.: C04B 35/536, C04B 41/83, H01M 8/02, F16J 15/10

(54) **Imprägnierter Körper aus expandiertem Graphit**
Impregnated expanded graphite body
Corps imprégné en graphite expanse

(30) Priorität: 07.12.2000 DE 10060839
(43) Veröffentlichungstag der Anmeldung: 12.06.2002
(73) Patentinhaber: SGL Carbon AG, 65203 Wiesbaden (DE)
(72) Erfinder: Bacher, Jürgen, 86637 Wertingen (DE); Öttinger, Oswin, Dr.-Ing., 86405 Meitingen (DE); Langer, Werner, 86450 Altenmünster (DE)

(56) Entgegenhaltungen:
- US-A- 3 573 122
- US-A1- 2001 046 560
- ANONYM: "GRAFTEHCH MATERIAL SAFETY DATA SHEET" INTERNETPUBLIKATION, [Online] XP002231629 Gefunden im Internet: <URL:http://www.graftech.com/products/graf oil/index.html> [gefunden am 2003-02-18]

## Beschreibung

Gegenstand der Erfindung ist ein mit Kunstharzen imprägnierter Körper aus expandiertem oder aus mindestens teilweise wieder verdichtetem expandiertem Graphit und ein Verfahren zum Herstellen eines solchen Körpers.

Werkstoffverbunde aus Graphit und Kunststoffen sind in vielen technischen Anwendungen weit verbreitet. Beispielsweise werden Körnungen aus Elektrographit mit Fluorkunststoffen zu hoch korrosionsbeständigen Bauteilen für den Chemieapparatebau verarbeitet, die allerdings wegen der Kosten der Fluorkunststoffe und der notwendigen Verarbeitungstechnik vergleichsweise teuer sind. Ein inhaltlich noch näher an der hier behandelten Anmeldung liegendes Thema ist in der Schrift US 4,265,952 dargestellt: Expandierter Graphit wird mit z.B. feinem PTFE-Pulver gemischt und anschließend verpresst. Insofern unterscheidet sich diese Herstellungstechnik von der in der hier vorliegenden Anmeldung beschriebenen Imprägniertechnik.

Ein anderes Beispiel für einen Werkstoffverbund aus Graphit und Kunststoff sind oberflächlich mit Harzen imprägnierte Folien aus Naturgraphit, die überwiegend in Form von Flachdichtungen gegen besonders aggressive Medien eingesetzt werden. Zu diesem zweiten Beispiel finden sich viele Belege in der technischen Literatur. Folien aus Naturgraphit werden heute weltweit jährlich zu Tausenden von Tonnen hergestellt. Das dazu verwendete Verfahren ist in den Patentschriften EP 0 087 489; US 3,404,061 und US 3,494,382 beschrieben. Kurz gefasst geschieht gemäß der Lehre dieser Literaturstellen folgendes: Ein Einlagerungsagens wie beispielsweise konzentrierte Schwefelsäure wirkt in Gegenwart eines Oxidationsmittels wie z.B. konzentrierte Salpetersäure oder Wasserstoffperoxid auf Naturgraphit, vorzugsweise plättchen- oder flockenförmigen Naturgraphit, ein. Dabei entstehen Graphiteinlagerungsverbindungen von ebenfalls flocken- oder plättchenartiger Gestalt. Durch kurzzeitiges Erhitzen, z.B. beim Einführen in die Flamme eines Gasbrenners, werden die Flocken thermisch zersetzt und durch den bei diesem Zersetzungsvorgang in ihrem Inneren entstehenden Gasdruck zu lockeren Graphitpartikeln von wurmartiger Gestalt aufgebläht. Dieses Produkt wird auch als "expandierter" Graphit oder als Graphitexpandat bezeichnet.

Expandierter Graphit ist außerordentlich bildsam und lässt sich leicht ohne Zuhilfenahme eines besonderen Binders unter mehr oder weniger starkem Verdichten formen. Das wirtschaftlich bedeutendste so hergestellte Produkt ist eine flexible Graphitfolie, die rationell auf Kalanderstraßen hergestellt werden kann. Solche Produkte haben typische Rohdichten zwischen 0,7 und 1,3 g/cm³. Es sind aber auch andere Teile verschiedener Geometrie, etwa einzelne Dichtungskörper möglich, die durchschnittlich stärker verdichtet sind und Rohdichten von 1,0 bis 1,8 g/cm³ aufweisen. Oder es gibt schwammartige Teile von durchschnittlich geringer Rohdichte, die Werte von 0,1 bis 1,0 g/cm³ haben. Alle diese Körper von unterschiedlicher Gestalt und unterschiedlicher Rohdichte haben ein offenes Porensystem. Sie werden im Folgenden als "Vorprodukt" bezeichnet.

Werkstoffverbunde aus einem solchen Vorprodukt und Kunstharzen oder Kunststoffen erfüllen vielfältige Aufgaben. Kunstharze oder Kunststoffe senken die Permeabilität, verbessern die Oberflächeneigenschaften, z.B. die Kratzfestigkeit, erhöhen die Festigkeit in geringem Umfang, senken die thermische Beständigkeit eines Werkstoffverbundes mit expandiertem Graphit, können auch die elektrische Leitfähigkeit vermindern oder schränken die Medienbeständigkeit ein. Eine zweckmäßige Technik zur Herstellung derartiger Werkstoffverbunde ist das Imprägnieren.

Gemäß DE 32 44 595 kann die Haftwirkung von Graphitfolien an Metallflächen dadurch vermindert werden, dass das Vorprodukt in oberflächennahen Zonen mit Furanharz imprägniert wird.

Nach dem bisherigen Stand der Technik ist das weitgehende Durchtränken von Formkörpern aus expandiertem und teilweise wieder verdichtetem Graphit schwierig. Zum Überwinden der Schwierigkeiten lehrt die WO 99/16141 (US 6,037, 074), dass ein solcher Körper dann in befriedigender Weise imprägnierbar ist, wenn er mit mineralischen Fasern durchsetzt ist, die auch durch die Oberfläche der jeweiligen Körper treten. Auf diese Weise werden kleine Kanäle entlang dieser mineralischen Fasern gebildet, in denen das Harz beim Imprägnieren in das Innere der Körper strömen kann. In dieser Schrift wird als Imprägniermittel ein in Aceton gelöstes Phenolharz - also ein lösungsmittelhaltiges Duromerharz mit Kondensationsreaktionen beim Härten - genannt.

Eine andere Methode zur Erzielung einer guten Durchtränkung von Körpern aus expandiertem Graphit besteht darin, die gewünschten Harze durch Lösungsmittel in niedrigviskose Flüssigkeiten zu überführen, mit denen die Imprägnierung vollständiger wird. In der japanischen Schrift JP 1 100 040 werden die Duromerharze auf der Basis von Phenolen, Epoxiden, Polyimiden, Melaminen, Polyestern und Furanen genannt, die in einer Mischungslösung mit Polyvinylbutyral verwendet werden.

US 3,573,122 beschreibt ein Verfahren, um normalerweise nicht elektrisch leitfähigen Materialien elektrische Leitfähigkeit zu verleihen, das die folgenden Schritte umfasst:
a) Bereitstellen von wurmförmigem Graphitexpandat mit einer Dichte von weniger als 2 lb/ft³ (= 0,032 g/cm³)
b) Pressen des Graphitexpandats in eine bestimmt Form, wobei dessen Dichte um den Faktor 2 bis 20 ansteigt
c) Bereitstellen eines flüssigen härtbaren organischen Polymers, z.B eines Epoxid- oder Polyurethanharzes
d) Absorption einer ausreichenden Menge des Polymers durch den verpressten Graphit, so dass der Polymeranteil 60 bis 99,95 % erreicht
e) Härten des Harzes.
Beispielsweise wird Graphitexpandat mit einer Ausgangsdichte von 0,2 lb/ft³ auf eine Dichte von 0,8 bis 10 lb/ft³ verpressst, das entspricht 0,013 bis 0,16 g/cm³.

US 2001/ 0 046 560 beschreibt ein Verfahren zum Imprägnieren von Graphitfolie mit einer Dichte von weniger als 1,7 g/cm³ und einer Porosität von ca. 50 % mit Methacrylatharz. Dabei ist es für den Erhalt eines blisterfreien Produkts essentiell, dass der Härtungsprozess bei einem Druck erfolgt, der größer ist als der atmosphärische Druck.

In der japanischen Patentschrift JP 1 308 872 A2 wird die Lösung anderer Aufgaben beschrieben. Es wird ein Werkstoffverbund aus einem Glasfaservlies und einer Folie aus expandiertem Graphit hergestellt, um auf diese Weise letztere zu verstärken und insgesamt einen flüssigkeitsdichten Werkstoff zu erhalten. Dies wird durch eine Imprägnierung mit Epoxidharz erreicht, wobei das Harz das Vlies durchdringt und bei der anschließenden Härtung der tragende Teil des Verbundwerkstoffes entsteht. Gleichzeitig dringt das Harz auch oberflächlich, d.h. partiell in die Folie ein und dichtet sie ab.

Ähnlichen Aufgaben, nämlich der Verbesserung der Festigkeit und der Gasdichtigkeit, dient das Imprägnieren von Folie aus expandiertem Graphit mit Phenolharz oder Epoxidharz, dargestellt in der japanischen Patentschrift JP 60 242 041 A2 (DE 35 12 867 C2). Die Besonderheit liegt hier in einem mehrfach wiederholten Entgasungsprozeß der flüssigen Harze und der darin befindlichen Folie, sicherlich mit dem Ziel, die Qualität der Imprägnierung zu verbessern.

In der Schrift DE 43 32 346 A1 wird das Imprägnieren der Folien aus expandiertem Graphit zum Zwecke der Haftverbesserung zu aufliegenden Elastomerschichten beschrieben. Die Viskosität der verwendeten Epoxidharze beträgt dort 2100 bis 2400 mPa·s.

In der japanischen Schrift JP 11354136 A2 mit dem Titel "Fuel Cell, Separator for Fuel Cell, and Manufacture Therefor" wird die Herstellung von expandiertem Graphit in Blattform (sheet-like shape) beschrieben. Dieser teilweise wieder verdichtete expandierte Graphit wird anschließend zerkleinert (pulverized) und dann alternativ mit Harzen, lösungsmittelfreiem Epoxidharz, festem Epoxidharz, Melaminharz, Acrylharz, Phenolharz, Polyamidharz usw. gemischt. Dieses Gemisch wird nachfolgend verformt. Diese Technik unterscheidet sich durch das Einmischen der Harze in eine Körnung aus expandiertem Graphit von den erfindungsgemäßen Körpern mit ganz anderer Struktur, wie später gezeigt werden wird..

Der vorstehend dargelegt Stand der Technik offenbart verschiedene unter Verwendung von expandiertem Graphit hergestellte Körper, die Kunstharze enthalten und Verfahren zu ihrer Herstellung. Man erkennt unschwer, daß es schwierig ist, hochwertige, kunstharzhaltige Graphitkörper aus wiederverdichtetem, expandiertem Graphit herzustellen. Alle beschriebenen Verfahren haben teils schwerwiegende Nachteile: Wenn mit Lösungsmitteln verdünnte und damit dünnflüssigere Harze beim Imprägnieren verwendet werden, geht das Imprägnieren zwar leichter, doch verursachen die Dämpfe der in aller Regel leicht flüchtigen Lösungsmittel beim Imprägnieren selbst, besonders aber bei späteren Verfahrensschritten gravierende Probleme. Insbesondere hinterlassen sie durch ihr Entweichen beim Aushärten der Harze feine Kanäle, die die Permeabilität der hergestellten Körper heraufsetzen. Wenn eine erhöhte Permeabilität weder toleriert werden kann noch gewünscht ist, besteht weiterhin ein generelles Problem:
Wenn das Aushärten nicht sehr langsam, d.h. zeitaufwändig vorgenommen wird, entstehen in den Körpern Blasen und Risse, die ihre Qualität erheblich herabsetzen. Entsprechendes gilt für Harzsysteme, die beim Aushärten Gase aus Kondensationsreaktionen freisetzen. Durch das Entweichen von Lösungsmitteln oder anderen Gasen und Dämpfen entsteht in den Körpern eine Restporosität. Es wird nun häufig versucht, die Restporosität durch einen oder mehrere zusätzliche Imprägniergänge zu beseitigen.
Die damit verbundene Vergrößerung des Aufwandes liegt auf der Hand und der Erfolg ist durchaus begrenzt. Lösungsmittelhaltige Harze erfordern vor allem stets auch Maßnahmen zu deren sicherer Handhabung und zum schadlosen Entfernen oder zum Rückgewinnen der Lösungsmittel, was den Aufwand noch weiter erhöht. Der Ausweg über den Zusatz von die Körperoberflächen durchsetzenden Fasern verbessert vielleicht die Imprägniereigenschaften des Körpers, beseitigt aber nicht die für das Verwenden lösungsmittelhaltiger Dämpfe oder Gase abspaltender Harze geschilderten Probleme. Zudem hat man stets ein bestimmte Fasern enthaltendes Produkt, das aufwändiger herstellbar ist.

Die Aufgabe der dieser Patentanmeldung zugrundeliegenden Erfindung war es deshalb, einen Körper aus expandiertem oder aus mindestens teilweise wieder verdichtetem expandiertem Graphit zu schaffen, dessen flüssigkeitszugängliches Porensystem vollständig oder teilweise mit einem nicht, teilweise oder vollständig ausgehärteten Kunstharz gefüllt ist. Dieser Körper sollte keine Fehlstellen wie Blasen oder Risse enthalten, die durch Reaktionen des Kunstharzes beim Aushärten verursacht werden können. Der Körper sollte mit vergleichsweise geringem Aufwand herstellbar sein. Er sollte korrosionsbeständig, elektrisch und thermisch leitfähig und in Abhängigkeit vom Verdichtungsgrad von flüssigkeitsdurchlässig bis hin zu gasdicht sein.

Die Aufgabe wird mit einem Körper gemäß Anspruch 1 und einem Verfahren gemäß Anspruch 17 dadurch gelöst, daß das Vorprodukt oder der aus dem imprägnierten Vorprodukt durch mindestens teilweises Verdichten erhaltene Körper entweder lösungsmittelfreie und niedrigviskose Harzsysteme aus der Gruppe der Isocyanate und ihren Reaktionspartnern, die zu Isocyanuraten, Urethanen oder Polyurethanen abreagieren, und/oder der Epoxide oder gehärtete Harzsysteme aus der vorgenannten Gruppe enthält. Die Harzsysteme gelangen durch Imprägnieren des Vorprodukts mit lösungsmittelfreien, niedrigviskosen, lagerstabilen Harzsystemen aus der Gruppe der Isocyanate und ihren Reaktionspartnern und/oder der Epoxide in den Körper.

Um die vorgenannten Nachteile lösungsmittelhaltiger Harzsysteme auszuschließen und dennoch die Vorteile von Harzsystemen niedriger Viskosität zu erreichen, werden gemäß der hiermit vorgelegten Erfindung die folgenden speziellen lösungsmittelfreien Harzsysteme eingesetzt:
1. Epoxidharzsysteme 1: Diese Epoxidharzsysteme sind durch die Hauptkomponenten Bisphenol-A-diglycidylether und Methylhexahydrophthalsäureanhydrid gekennzeichnet, wobei gemäß Herstellerangaben die erstgenannte Komponente mehr als 50 Gew.-% und die letztgenannte Komponente zwischen 25 und 50 Gew.-% der Gesamtmischung ausmachen. Die Mischungen enthalten einen latenten Katalysator, der die Zeiten beim Aushärten bei erhöhten Temperaturen entscheidend beeinflußt. Wo dies möglich ist, enthält das Harzsystem auch keinen Katalysator. Diese Harzsysteme weisen bei Raumtemperatur typischerweise eine Viskosität von 500 ± 100 mPa·s auf, bei leicht erhöhter Verarbeitungstemperatur von 50°C typischerweise eine Viskosität von etwa 70 ± 15 mPa·s.
2. Epoxidharzsysteme 2: Diese Epoxidharzsysteme sind durch die Hauptkomponenten Bisphenol-F-diglycidylether und Methylhexahydrophthalsäureanhydrid gekennzeichnet, wobei gemäß Herstellerangaben die erstgenannte Komponente mehr als 50 Gew.-% und die letztgenannte Komponente zwischen 25 und 50 Gew.-% der Gesamtmischung ausmachen. Die Mischungen enthalten außerdem einen latenten Katalysator, der die Zeiten beim Aushärten bei erhöhten Temperaturen entscheidend beeinflußt. Wo dies möglich ist, enthält das Harzsystem auch keinen Katalysator. Diese Harzsysteme weisen bei Raumtemperatur typischerweise eine Viskosität von etwa 200 ± 40 mPa·s auf, bei leicht erhöhter Verarbeitungstemperatur von 50°C typischerweise eine Viskosität von 40 ± 10 mPa·s.
3. Isocyanatharzsysteme: Diese Harzsysteme sind durch die Hauptkomponenten Diphenylmethandiisocyanat und Bis(4,4'-glycidyloxyphenyl)-propan gekennzeichnet, wobei gemäß Herstellerangaben die erstgenannte Komponente 75 bis 85 Gew.-% und die letztgenannte Komponente zwischen 15 und 25 Gew.-% dieser Teilmischung ausmachen. Solche Harzsysteme werden auch als modifizierte Isocyanurat-Harzsysteme bezeichnet. Hundert Anteile dieser Teilmischung werden mit fünf bis zehn Anteilen eines modifizierten Diphenylmethandiisocyanates, das als latenter Katalysator wirkt, zusammengegeben. Die Teilmischungen aus Diphenylmethandiisocyanat und Bis(4,4'-glycidyloxyphenyl)-propan besitzen bei Raumtemperatur eine Viskosität von 40 ± 10 mPa·s, das modifizierte Diphenylmethandiisocyanat hat 20 ± 5 mPa·s. Die angegebenen Gesamtmischungen aus hundert Anteilen der Teilmischung und fünf bis zehn Anteilen des modifizierten Diphenylmethandiisocyanates haben Viskositäten im Bereich von 25 bis 40 mPa·s.

Die erfindungswesentlichen, bei Verarbeitungstemperatur niedrigen Viskositäten der Imprägnierharze aus den drei Harzsystemen sichern eine gute und rationelle Imprägnierung des Vorproduktes und die bei der Härtung ablaufenden Polyadditionen lassen keine niedermolekularen Spaltprodukte entstehen, die eine Blasenbildung oder gar Risse im Körper verursachen könnten. Die Erprobung der Harzsysteme wird in den Beispielen näher beschrieben.

Die (latenten) Katalysatoren bewirken einerseits rasch ablaufende Härtungsreaktionen bei hohen Temperaturen andererseits geringe Veränderungen im Chemismus der Harzsysteme bei niedrigen Temperaturen - etwa Raumtemperatur - , die beim Imprägnieren angewendet werden. Diese geringen Veränderungen kann man mit Hilfe von Viskositätsmessungen belegen.
Da die Viskositäten der oben vorgestellten Epoxidharzsysteme bei Raumtemperatur mehrere hundert mPa·s betragen, die Imprägnierwirkung aber bei Viskositäten von unter hundert mPa·s besonders vorteilhaft ist, wird das Imprägnieren mit diesen Harzsystemen vorzugsweise bei leicht erhöhten Temperaturen im Bereich von 40 bis 60°C durchgeführt. Diese leicht erhöhten Temperaturen bewirken zunächst eine drastische Erniedrigung der Viskosität, dann aber tritt im Laufe der Zeit ein geringfügig rascherer Anstieg der Viskosität ein als bei Raumtemperatur. Das schlägt jedoch noch nicht negativ auf das Verarbeitungsverhalten der Harzsysteme durch. Dies zeigen die im Folgenden beispielhaft aufgeführten Viskositäten der Epoxidharzsysteme 2 mit der Komponente Bisphenol-F-diglycidylether. Während der gesamten Untersuchungsdauer wird das Harzsystem bei 50°C gehalten:
Frische Harzmischung ca. 35 mPa·s, nach 6 Tagen ca. 60 mPa·s und nach 12 Tagen ca. 150 mPa·s.

Das Harzsystem aus Isocyanat und den Reaktionspartnern, das im Laufe der Zeit zu Isocyanuraten, Urethanen oder Polyurethanen abreagiert, wird während der gesamten Untersuchungsdauer bei Raumtemperatur gehalten und zeigt dann folgende Viskositäten in mPa·s:
Frische Mischung ca. 35, nach drei Tagen ca. 45, nach 10 Tagen ca. 50, nach vierzehn Tagen ca. 60.

Die anhand der Viskositätsmessungen nachgewiesene, geringe Rate der Veränderungen der Harzsysteme bei niedrigen Temperaturen - etwa Raumtemperatur für Isocyanate und ihre Reaktionspartner und 50°C für Epoxidharzsysteme - und über einen Zeitraum von knapp zwei Wochen wird künftig mit dem Begriff "hohe Lagerstabilität" bezeichnet. Es hat sich gezeigt, daß die Lagerstabilität der Harzsysteme durch den Imprägniervorgang selbst und dadurch, daß die Harzsysteme nach dem Imprägnieren im Vorprodukt enthalten sind, nicht verändert wurde. Dies zeigte sich indirekt z.B. durch den Vergleich von Härtezeiten reiner Harzsysteme und imprägnierter Vorprodukte. In beiden Fällen wurden die gleichen Härtezeiten gemessen und es wurden keine Unterschiede in der Qualität der gehärteten Harze festgestellt.

Das einmal in das Vorprodukt eingebrachte Harz neigt nicht dazu, wieder aus dem Vorprodukt auszulaufen. Neben dem Benetzungsverhalten sind vor allem folgende Gesichtspunkte maßgeblich:
1. Beim Imprägnieren werden besondere Techniken angewandt, wie z.B. Vakuum- oder Vakuum-Druck-Imprägnierung. Mit Hilfe solcher Techniken wird die Befüllung eines Teiles der vorhandenen Poren erst ermöglicht, z.B. werden so die Befüllungswiderstände - wie das Durchströmen enger Porenhälse - überwunden. Ohne die Anwendung besonderer Maßnahmen kann das so einmal eingefüllte Harz nicht wieder aus dem Vorprodukt austreten.
2. Wie oben dargestellt, steigt die Viskosität der einmal eingebrachten Harze allmählich. Dieser Anstieg ist bei niedrigen Temperaturen gering (Lagerstabilität), wird aber bei höheren Temperaturen sehr ausgeprägt, die Harze gelieren. Solche angelierten Harze können praktisch nicht mehr aus dem imprägnierten Körper austreten. Der für das Herstellen des Vorprodukts verwendete expandierte Graphit besteht aus aufgefächerten, wurmartigen Gebilden, in denen feinste Graphitplättchen in der Form eines defekten Ziehharmonikabalges zusammenhängen. Beim Zusammenpressen zum Vorprodukt schieben sich diese Plättchen in- und übereinander. Sie verzahnen sich untereinander und kommen so wieder in einen ohne Zerstörung nicht mehr lösbaren Kontakt. Es entsteht auf diese Weise im Vorprodukt ein poröses Graphitgerüst oder -Netzwerk, das wegen der guten Kontakte der Graphitplättchen untereinander eine gute elektrische und auch eine gute thermische Leitfähigkeit hat. Da diese Eigenschaften ihren Grund in der Gerüstfunktion des Graphits im Vorprodukt haben, werden sie durch das Imprägnieren mit Kunstharz nicht negativ beeinflusst. Bei einem späteren Komprimieren des mit Harz imprägnierten Vorprodukts können sie sogar noch verbessert werden.
Das Vorprodukt ist überall von offenen Poren, die untereinander in vielfältiger Weise verbunden sind, durchzogen. Durch dieses Netzwerk von miteinander verbundenen Poren, dringt beim Imprägnieren das Kunstharz in den Vorproduktkörper ein und kann ihn unter geeigneten Bedingungen auch vollständig ausfüllen. Aus dem Netzwerk von Poren wird dann ein Netzwerk aus Kunstharz. Beide Netzwerke, das Graphitnetzwerk und das Poren- bzw. Kunstharznetzwerk, ergeben in Kombination die hervorragenden Eigenschaften der so hergestellten Endprodukte. Durch ihr gezieltes Einstellen wird es auch möglich, das Eigenschaftsniveau der Endprodukte zu steuern. Beispielsweise hat ein wenig vorverdichteter und damit hochporöser Vorproduktkörper eine geringere elektrische und thermische Leitfähigkeit und einen geringeren Anisotropiegrad als ein höher verdichteter Vorproduktkörper. Er kann dafür jedoch mehr Kunstharz aufnehmen und erhält ein modifiziertes Festigkeitsverhalten. Bei stark verdichteten Vorproduktkörpern sind diese Verhältnisse umgekehrt. Aus ihnen werden nach dem Imprägnieren und Aushärten des Kunstharzes Produkte mit verbesserter elektrischer und thermischer Leitfähigkeit sowie guten mechanischen Festigkeiten erhalten. Alle hier beschriebenen erfindungsgemäßen Körper sind gegen Flüssigkeiten und Gase hoch impermeabel, wenn ihr Porennetzwerk vollständig mit Kunstharz gefüllt ist.

Das in WO 98/09926 beschriebene Produkt unterscheidet sich gegenüber dem hier vorgestellten dadurch, daß dort eine Graphitfolie lediglich mit einer Kunststoffschicht zum Zwecke der Verstärkung versehen wird, wobei der Kunststoff die Oberfläche bedeckt und z.T. in die Folie eindringt.

Für das Imprägnieren der Vorproduktkörper können alle bekannten Verfahren wie beispielsweise die in DE 35 12 867 beschriebenen verwendet werden. Vorzugsweise werden jedoch Tauchverfahren, insbesondere Tauchverfahren mit vorherigem Evakuieren des den Vorproduktkörper enthaltenden Kessels und Fluten des evakuierten Kessels mit dem Kunstharz verwendet. Gegebenenfalls wird der Kessel nach dem Fluten mit dem Kunstharz noch mit einem Gasdruck beaufschlagt. Will man nur eine oberflächennahe oder teilweise Imprägnierung des Vorproduktkörpers erreichen, wird die Imprägnierdauer verkürzt oder es werden die Flächen, von denen das Imprägnieren ausgehen soll, entsprechend mit Kunstharz eingestrichen oder besprüht oder es wird der Körper nur teilweise getaucht. Nach dieser Behandlung wird das überschüssige Harz von der Oberfläche entfernt.

Ein wesentlicher Aspekt dieser Erfindung ist das rationelle, schadenfreie Imprägnieren und Härten. Das auf Grund der Polyadditionsreaktionen mögliche rasche blasen- und rißfreie Härten wurde oben besprochen. Das rationelle Imprägnieren hängt wesentlich von der Viskosität der Harzsysteme ab. Dies zeigt folgende Gegenüberstellung für die Vakuumimprägnierung bei 50°C eines gleichartigen Vorproduktes mit folgenden Merkmalen: flexible Graphitfolie mit Rohdichte 1,0 g/cm³ und 1,0 mm Dicke:

| Harzsystem | Viskosität (mPa·s) | Imprägnierdauer (h) | Harzaufnahme (Gew.-%) |
|---|---|---|---|
| Epoxidharzsysteme 2 | 40 | 5 | 15 |
| Epoxidharzsysteme 1 | 70 | 5 | 8 |

Man kann also bei sonst gleichen Randbedingungen und in gleicher Zeit mit den niedrigviskosen Epoxidharzsystemen 2 etwa die doppelte Harzmenge in das Vorprodukt einbringen als mit den zäheren Harzsystemen 1. Wenn man nur die in der Tabelle angegebene kleinere Harzmenge einbringen wollte, dann erreicht man dies bei einer Imprägnierung mit den niedrigviskosen Epoxidharzsystemen 2 in nur der halben Imprägnierzeit verglichen mit den Epoxidharzsystemen 1. Ein rascher Imprägniervorgang ist für eine rationelle und wirtschaftliche Fertigung von hoher Bedeutung.

Je nach dem Verdichtungsgrad des Vorprodukts und dem davon abhängigen offenen Porenvolumen kann das Vorprodukt bis zu 100% seines eigenen Gewichtes an Harz aufnehmen. Wird jedoch eine große elektrische Leitfähigkeit des Endprodukts gewünscht, so geht man zweckmäßigerweise von einem stärker vorverdichteten Vorproduktkörper mit einem geringeren offenen Porenvolumen aus, der dann z.B. nur 20 Gew.-% Harz bezogen auf sein eigenes Gewicht aufnehmen kann. Ein solcher Körper kann nach dem Aushärten des Harzes für Flüssigkeiten und Gase in hohem Maße impermeabel sein, siehe Beispiele, und weist gute Festigkeitseigenschaften auf.

Insbesondere Epoxidharze aber auch Isocyanatharze mit ihren Reaktionspartnern sind dafür bekannt, daß ihre Härtungsreaktionen allmählich einsetzen und bei entsprechender Temperaturführung auch wieder gebremst werden können. Bei Epoxid- und Isocyanatharzen kann man also einen anreagierten, gelartigen Zustand konservieren, der in der Fachsprache auch "B-Zustand" genannt wird.

Im B-Zustand haben die Kunstharze eine höhere Viskosität, sind aber noch formbar. Dieser B-Zustand wird im Rahmen dieser Erfindung vorteilhaft genutzt. So können z.B. Harze oder mit den Harzen imprägnierte Vorproduktkörper oder Teile über einen längeren Zeitraum gelagert oder während dieser Zeit transportiert werden. Es sind weitere Schritte zum Zwischenbehandeln der imprägnierten Körper möglich. Beispielsweise können solche Körper mechanisch bearbeitet, z.B. geschnitten oder es können mehrere von ihnen zu einem Paket zusammenlaminiert werden. Von besonderer Bedeutung für die Erfindung ist es jedoch, daß die ein Harz im B-Zustand enthaltenden Vorproduktkörper in geeigneten Formeinrichtungen und Formen in ihre endgültige Form gebracht werden können. Bei der damit einhergehenden Druckbehandlung werden die gelartigen Harze praktisch nicht mehr aus dem Porensystem des Körpers herausgequetscht wie dies in unkontrollierbarer Weise bei Harzen der Fall ist, die nicht in einen Gelzustand überführt werden können. Nach dem Formgeben wird der Harzanteil des mit Harz imprägnierten Vorproduktkörpers ausgehärtet. Dies wird z.B. in einer Härtekammer bei den vorgeschriebenen Temperaturen und Zeiten durchgeführt.

Wenn die Formeinrichtungen mit Vorrichtungen zum Härten der Harze ausgerüstet sind, kann der Formungsvorgang gleich mit dem Aushärten des Harzes im Körper verbunden werden. Man erhält so in vorteilhafter Weise direkt das gewünschte Endprodukt. Eine solche Vorgehensweise ist insbesondere dann interessant, wenn größere Serien von Bauteilen oder Körpern nach den oben beschriebenen Techniken hergestellt und einige Verfahrensschritte in der geschilderten Art rationell zusammengefaßt werden sollen. Zweckmäßigerweise gibt man dazu das imprägnierte Vorprodukt - meist in Form eines Halbzeuges oder Zuschnittes - in eine schon heiße Form und schließt diese. Dadurch nimmt das Halbzeug die gewünschte Geometrie an, wird gleichzeitig durchgewärmt und härtet endgültig aus.

Die Härtung erfolgt bei latent katalysierten Harzsystemen aus der Gruppe der Isocyanate und ihren Reaktionspartnern oder/und aus der Gruppe der Epoxide bei 120 bis 180°C. Bei solchen Systemen genügen zwei Stunden Härtezeit, wenn die Temperaturen am unteren Rand des angegebenen Temperaturintervalles liegen. Wird eine relativ hohe Temperatur am oberen Rand des angegebenen Temperaturintervalles gewählt, genügen fünfzehn Minuten Härtezeit.

Bei nicht latent katalysierten Harzsystemen aus der Gruppe der Isocyanate und ihren Reaktionspartnern oder/und aus der Gruppe der Epoxide wird im selben Temperaturintervall von 120 bis 180°C gehärtet, jedoch sind dann Härtezeiten von vierundzwanzig bis vierzig Stunden erforderlich. Wird eine relativ hohe Temperatur am oberen Rand des angegebenen Temperaturintervalles gewählt, genügen vierundzwanzig Stunden Härtezeit. Wenn die Temperaturen am unteren Rand des angegebenen Temperaturintervalles liegen, sind bis zu vierzig Stunden Aushärtung nötig.

Graphite gibt es in einer größeren Vielfalt auf der Basis künstlicher Herstellung und natürlicher Vorkommen, beide werden in der Patentschrift US 3,404,061 erwähnt. Im folgenden wird nur auf den Naturgraphit eingegangen, der als Rohstoff in den hier beschriebenen Körpern enthalten ist.

Naturgraphit wird bergmännisch gewonnen und wird mit beträchtlichem Aufwand vom "tauben" Gestein getrennt. Dennoch bleiben auch an den Naturgraphitflocken kleinste Mengen vom Gestein hängen oder sind mit den Flocken verwachsen. Für jede Provenienz des Naturgraphites sind diese "Fremdbestandteile" charakteristisch und können ebenfalls als Aschewert festgestellt werden. Eine Methode zur Bestimmung solcher Aschewerte ist in der DIN 51 903 unter dem Titel "Prüfung von Kohlenstoffmaterialien Bestimmung des Aschewertes" beschrieben.

Wegen der Endanwendungen der erfindungsgemäßen Kunstharz enthaltenden Graphitkörper ist es nicht unerheblich, welche Aschewerte und welche Aschezusammensetzung der enthaltene Graphit besitzt.
Werden solche Körper z.B. als an sich korrosionsbeständige Dichtungen in Anlagen eingesetzt, die mit korrosiven Medien beaufschlagt sind, so können bestimmte Aschebestandteile zusammen mit dem korrosiven Medium zu einem Lochfraß in den an den korrosionsbeständigen Dichtungen angrenzenden Flanschen oder Buchsen von Stopfbuchspackungen und letztlich zu deren Versagen führen.

Ein anderes Beispiel für eine mögliche negative Wirkung eines zu hohen Aschewertes oder einer ungünstigen Aschenzusammensetzung des Graphits in einem erfindungsgemäßen, kunstharzhaltigen Körper findet man in der Brennstoffzellentechnik. So können beispielsweise Bipolarplatten von Proton-Exchange-Membrane-Fuel-Cells aus dem erfindungsgemäßen Material hergestellt sein. Enthält nun eine solche Platte einen zu hohen Aschegehalt, so kann während des Betriebes der Brennstoffzelle ein Teil schädlicher Aschebestandteile aus der Platte gelöst werden und die in der Nähe der Oberflächen der Bipolarplatte befindlichen empfindlichen Katalysatoren vergiften, was zu einem frühen Leistungsabfall der Zelle führt.

Wegen der möglichen negativen Auswirkungen eines zu großen Aschegehaltes liegt der Aschegehalt des für das Herstellen der erfindungsgemäßen Körper verwendeten Graphits bei 4 Gewichtsprozent und weniger, vorzugsweise bei weniger als 2 Gewichtsprozent und in besonderen Fällen bei nicht mehr als 0,15 Gewichtsprozent.

Es kann zweckmäßig sein, den erfindungsgemäßen Körper mit Füllstoffen anzureichern, wobei die Auswahl der Füllstoffe auf die Anwendung (z.B. Brennstoffzelle) abzustimmen ist. Füllstoffe können zum expandierten Naturgraphit nahe verwandte, elektrisch leitfähige Stoffe wie z.B. Stoffe aus der Gruppe der natürlich vorkommenden Flockengraphite, der künstlich hergestellten Elektrographite, Ruße oder Kohlenstoffe, der Graphit- oder Kohlenstofffasern sein. Desweiteren können Siliciumcarbid in Korn- oder Faserform oder auch elektrisch nicht leitfähige keramische oder mineralische Füllstoffe in Korn-, Plättchen- oder Faserform wie Silikate, Carbonate, Sulfate, Oxide, Gläser oder ausgewählte Mischungen davon verwendet werden.

Die erfindungsgemäßen Körper können überall dort verwendet werden, wo elektrisch und thermisch leitfähige Bauteile von geringem Gewicht mit guter Korrosionsbeständigkeit benötigt werden. Weitere für verschiedene Anwendungen wesentliche Eigenschaften sind geringe Aschewerte und relativ hohe Dichtigkeit. Insbesondere werden die erfindungsgemäßen Körper für Komponenten von Brennstoffzellen, für Dichtungen und für Wärmeleitelemente, z.B. zum Ableiten der Überschusswärme von integrierten Schaltungen verwendet.

Im Folgenden wird die Erfindung anhand von Beispielen weiter erläutert. Zusätzlich zu den Beispielen werden die Methoden zur Gewinnung der Daten der elektrischen Eigenschaften und der Gasdichtigkeit in Kürze behandelt.

Zur Bestimmung der Gasdichtigkeit wurde der harzimprägnierte Graphitkörper als Trennplatte (Prüfkörper) zwischen zwei Kammern einer Prüfvorrichtung gepreßt. In der ersten Kammer herrscht ein konstant gehaltener Heliumgasdruck von absolut 2 bar. In der zweiten Kammer befand sich ein Metallnetz, welches den Prüfkörper mechanisch stützte. Außerdem war diese Kammer bei Umgebungsdruck mit einer mit Flüssigkeit gefüllten Bürette verbunden, wie sie z. B. bei der Leckagemessung von Flachdichtungen nach DIN 3535 verwendet wird. Das aus der ersten Kammer kommende und durch den Prüfkörper diffundierende Heliumgas wurde in der zweiten Kammer aufgefangen und mittels Verdrängung der Flüssigkeit in der Bürette gemessen. So konnte das Volumen des Heliumgases bestimmt werden, welches in einer Zeiteinheit durch die Probe diffundierte. Unter Berücksichtigung der Heliumdichte und der Prüffläche wurde eine Leckagerate ermittelt, die in der Einheit mg/(m²·s) angegeben wird.

Der Werkstoffverbund aus teilweise wieder verdichtetem expandiertem Graphit und Kunstharz hat anisotrope Eigenschaften, d.h. die einzelnen Graphitplättchen des expandierten Graphites haben - bedingt durch die Herstellungstechnik - eine Vorzugsorientierung. Parallel zu dieser Vorzugsorientierung ist z.B. der elektrische Widerstand niedrig, senkrecht dazu ist er höher. Im vorliegenden Fall wurden die erfindungsgemäßen, ausgehärteten Formkörper durch Messen des elektrischen Widerstandes senkrecht zur Vorzugsorientierung der Graphitlagen vergleichend charakterisiert. Dazu wurde der Körper zwischen zwei vergoldete Elektroden mit 50 mm Durchmesser mit definierter und jeweils gleicher Flächenpressung eingespannt. Die mit Hilfe eines Gerätes (Resistomat 2318) der Fa. Burster (Gernsbach, Deutschland) festgestellten elektrischen Widerstände R werden im Folgenden mit der Dimension [mΩ] angegeben.

### Beispiel 1

Platten aus teilweise wieder verdichtetem expandiertem Graphit (Vorproduktplatten) mit einem Aschewert von weniger als 2 Gew. %, einer Dicke von 1 mm und einer Rohdichte von 1,0 g/cm³ werden einer Vakuum-Imprägnierbehandlung mit latent katalysierten Epoxidharzsystemen unterworfen. Es wurden die Epoxidharzsysteme 1 und 2 verwendet, die von der Fa. Bakelite (Duisburg, Deutschland) stammten. Die Epoxidharzsysteme 1 tragen die Handelsbezeichnung Rütapox VE 4834 und besaßen bei 50 °C eine Viskosität von ca. 70 mPa·s. Die Epoxidharzsysteme 2 tragen die Handelsbezeichnung Rütapox M4-1158-CK und besaßen bei 50 °C eine Viskosität von ca. 40 mPa·s.

Die Vorproduktplatten wurden in einen evakuierbaren Behälter eingebracht und auf 50 °C erhitzt. Nach Anlegen eines Vakuums (ca. 10 mbar Restdruck) wurde das vorher auf 50 °C temperierte Harzsystem in den Behälter gesaugt, so daß die Vorproduktplatten vollständig von Harz umgeben waren. Nach der in Tabelle 1 angegebenen Imprägnierdauer wurden die nun imprägnierten Platten aus dem Bad genommen und nach Abwischen des oberflächlich anhaftenden Harzes gewogen. Die imprägnierten Platten wurden anschließend bei 150 °C im vorgeheizten Umluftofen in 30 Minuten ausgehärtet. Die Platten zeigten trotz dieser Schockhärtung keinerlei Blasen oder Risse. In Tabelle 1 sind die ermittelten Werte zu den Imprägnierversuchen mit den Epoxidharzsystemen 1 und 2 sowie Vergleichswerte von einer gleichartigen, nicht imprägnierten Vorproduktplatte zusammengefaßt. Dargestellt sind das verwendete Harzsystem, die Imprägnierdauer, der nach dem Aushärten ermittelte Harzgehalt des imprägnierten Körpers, dessen elektrischer Durchgangswiderstand R - gemessen senkrecht zur Vorzugsorientierung der Graphitplättchen - und die Heliumpermeabilität λ, senkrecht zur Vorzugsorientierung der Graphitplättchen gemessen.

**Tabelle 1:**

| Vergleich des Durchgangswiderstandes R und der Heliumpermeabilität λ von epoxidharzimprägniertem Vorprodukt (Dicke 1 mm, Rohdichte 1,0 g/cm³) mit nicht imprägniertem Vorprodukt (Dicke 1 mm, Rohdichte 1,0 g/cm³). | | | | | |
|---|---|---|---|---|---|
| | Imprägnierdauer [h] | Viskosität [mPa·s] | Harzgehalt [%] | R [mΩ] | λ [mg/(m²·s)] |
| Epoxidharzsysteme 1 | 10 | 70 | 15 | 0,52 | 0,07 |
| Epoxidharzsysteme 2 | 5 | 40 | 14,6 | 0,39 | 0,04 |
| nicht imprägnierte Vorproduktplatte | - | - | 0 | 0,28 | 0,32 |

Wie aus Tabelle 1 zu entnehmen ist, erreicht man mit den niedrigviskosen Epoxidharzsystemen 2, welche auf Bisphenol-F-diglycidylether basieren, bereits nach 5 Stunden nahezu den gleichen Harzgehalt von ca. 15 % wie bei dem höher viskoseren Epoxidharzsystemen 1, welche auf Bisphenol-A-diglycidylether basieren, nach zehnstündiger Imprägnierdauer.

Beim Vergleich des Werkstoffverbundes und des nicht imprägnierten Vorproduktes zeigt sich folgendes: Durch die Harzimprägnierung reduziert sich die Heliumdurchlässigkeit der Körper um den Faktor fünf bzw. acht. Der Durchgangswiderstand wird durch die Imprägnierbehandlung nur geringfügig erhöht.

### Beispiel 2

In diesem Beispiel wurden die Epoxidharzsysteme 1 ohne latenten Katalysator verwendet. Zum Einsatz kam eine Vorproduktplatte des selben Typs wie sie in Beispiel 1 eingesetzt wurde. Auch die Imprägnierbedingungen glichen bezüglich Verfahrensweise, Zeit und Temperatur denen in Beispiel 1.
Unterschiedlich ist jedoch das Aushärteverhalten der Harze. Um die imprägnierte Vorproduktplatte auszuhärten, ist in diesem Beispiel eine Härtedauer von 24 h bei 150 °C notwendig.
Die Epoxidharzsysteme 1 haben ohne latenten Katalysator bei 50 °C eine hohe Lagerstabilität. Ausgehend von 30 bis 70 mPa·s kommt es nach vierwöchiger Lagerung und Messung bei 50°C zu einem Viskositätsanstieg auf 65 bis 90 mPa·s. Harzsysteme mit latentem Katalysator weisen schon nach ca. 1 Woche einen Viskositätsanstieg auf über 100 mPa·s auf.

### Beispiel 3

In diesem Beispiel wurden folgende Platten aus teilweise wieder verdichtetem expandiertem Graphit (Vorproduktplatten) durch Tauchen bei Raumtemperatur mit einem Isocyanatharzsystem imprägniert.

**Tabelle 2:**

| Für die Imprägnierung mit einem Isocyanatharzsystem verwendete Platten aus teilweise wieder verdichtetem expandiertem Graphit (Vorproduktplatten). | | | |
|---|---|---|---|
| | Typ der Vorproduktplatte | Dicke [mm] | Rohdichte [g/cm³] |
| Beispiel 3a | F02510C | 0,25 | 1,0 |
| Beispiel 3b | L10010C | 1,0 | 1,0 |
| Beispiel 3c | L20010C | 2,0 | 1,0 |
| Beispiel 3d | L40005C | 4,0 | 0,5 |

Das verwendete Isocyanatharzsystem hatte folgende Zusammensetzung:

| | |
|---|---|
| 100 | Teile Blendur VP KU 3-4520 |
| 10 | Teile Blendur VP PU 90IK06 |

Beide Harzkomponenten stammten von Fa. Rhein Chemie Rheinau GmbH (Mannheim, Deutschland). Blendur VP KU 3-4520 besteht zu 75 - 85Gew.-% aus Diphenylmethandiisocyanat und zu 15-25Gew.-% aus Bis(4,4'-glycidyloxyphenyl)-propan. Bei Blendur VP PU 90IK06 handelt es sich um den latenten Katalysator, der laut Herstellerangaben überwiegend aus modifiziertem Diphenylmethandiisocyanat besteht.
Die verschiedenen Vorproduktplatten wurden vollständig im Harzsystem untergetaucht. Nach 10 Stunden Tauchzeit wurden die Platten dem Harzbad entnommen und das oberflächlich anhaftende Harz abgestreift. Die imprägnierten Platten wurden dann in einen vorgeheizten Umluftofen gegeben und bei 160 °C in 30 Minuten ausgehärtet. Die Platten hatten nach dieser Schockhärtung keinerlei Blasen oder Risse.

Die Harzgehalte der aufgelisteten Vorproduktplatten sowie ausgewählte Materialeigenschaften werden in Tabelle 3 im Vergleich zu nicht imprägnierten Vorproduktplatten dargestellt.

**Tabelle 3:**

| Vergleich des Durchgangswiderstandes R und der Heliumpermeabilität λ von ausgehärtetem, imprägniertem Vorprodukt (unterschiedlicher Dicke und Rohdichte) mit nicht imprägniertem Vorprodukt (von ebenfalls unterschiedlicher Dicke und Rohdichte); zu vergleichen sind insbesondere die Beispiele 3a und 3a' sowie Beispiele 3b und 3b'. | | | | |
|---|---|---|---|---|
| | Typ der Vorproduktplatte | Harzgehalt [%] | R [mΩ] | λ [mg/ (m²·s )] |
| Beispiel 3a | F02510C | 29,4 | 0,24 | < 0,0015 |
| Beispiel 3b | L10010C | 16,0 | 0,43 | 0,028 |
| Beispiel 3c | L20010C | 11,4 | 0,57 | - |
| Beispiel 3d | L40005C | 38,9 | 0,85 | - |
| Beispiel 3a' | F02510C | 0 | < 0,10 | 1,50 |
| Beispiel 3b' | L10010C | 0 | 0,28 | 0,32 |

Wie aus Tabelle 3 hervorgeht, erhält man je nach Rohdichte des Vorproduktes eine unterschiedlich starke Harzaufnahme, wobei eine niedrige Rohdichte eine hohe Harzaufnahme zur Folge haben kann. Das imprägnierte Vorprodukt kann bis zu 40 % Harz enthalten. Die Heliumpermeabilität der imprägnierten Platten ist im Gegensatz zu nicht imprägnierten um mehr als einen Faktor zehn geringer. Der elektrische Durchgangswiderstand wird durch die Imprägnierbehandlung nur mäßig erhöht.

### Beispiel 4

Gegenstand dieses Ausführungsbeispieles war die Imprägnierung einer Vorproduktplatte mit den Epoxidharzsystemen 1 ohne latenten Katalysator, deren Vorhärtung und Formgebung nach dem Imprägnieren mit Kunstharz.

Die Vorproduktplatte aus teilweise wieder verdichtetem expandiertem Graphit hatte eine Dicke von 2,7 mm und eine Rohdichte von 0,65 g/cm³. Der Aschewert des Graphites war kleiner gleich 0,15 Gew.-%. Der Vakuumimprägnierprozeß erfolgt bei 50°C in Anlehnung an Beispiel 1. Nach einer Imprägnierdauer von zwei Stunden wurde die nun imprägnierte Platte aus dem Bad genommen und nach Abwischen des oberflächlich anhaftenden Harzes gewogen. Der Harzgehalt der nicht ausgehärteten Platte betrug 16 %. Anschließend wurde die Platte für die Dauer von 20 Stunden in einen 150°C warmen Umluftofen gegeben und das im Körper enthaltene Harz in den B-Zustand überführt. Im B-Zustand war das enthaltene Harz angeliert und die imprägnierte Platte noch weich und biegsam. Sie wurde in ein auf 180°C vorgeheiztes Preßwerkzeug eingelegt, für die Dauer einer Stunde in die Form gepreßt und dabei weiter verdichtet. Die Platte nahm die Geometrie der mit Antihaftmittel beschichteten Preßform an. Nach dem Öffnen der Preßform hatte der imprägnierte und nun angehärtete Formkörper eine hinreichende Stabilität, so daß er ohne Zerstörung aus der Form entnommen werden konnte. Nach einer weiteren Temperaturbehandlung des Formkörpers über 12 Stunden bei 150°C war das Harz vollständig ausgehärtet. Der ausgehärtete Formkörper zeigte keinerlei Risse oder Blasen. Des weiteren wurde durch das Pressen kein im B-Zustand befindliches Harz aus dem imprägnierten Körper herausgepreßt, so daß sich an der Oberfläche des Formkörpers keine geschlossene Harzschicht ansammelte. Wie die Praxis gezeigt hat, wird überschüssiges Harz, das vorher nicht in den B-Zustand überführt worden war, beim Verpressen in einer Formgebungsvorrichtung aus dem Körper herausgequetscht. Dieses herausgequetschte Harz kann auf den äußeren Oberflächen des Körpers eine Harzhaut bilden, die elektrisch und thermisch isolierend wirkt und die je nach dem vorgesehenen Verwendungszweck des Produkts unerwünscht sein kann.

### Beispiel 5

Die Vorproduktplatte war vom gleichen Typ wie in Beispiel 4 und hatte eine Dicke von 2,7 mm und eine Rohdichte von 0,65 g/cm³. Diese Vorproduktplatte wurde bei Raumtemperatur eine Stunde in ein Imprägnierharz getaucht. Dieses Harz bestand aus 95 Gewichtsteilen Blendur VP KU 3-4520 und 5 Gewichtsteilen Blendur VP PU 90IK06. (Beide Komponenten wurden auch im Beispiel 3 in geringfügig anderer Zusammensetzung verwendet.) Der Harzgehalt der Platte betrug nach dem Imprägnieren 15 Gew.-%. Die imprägnierte Platte wurde bei 150 °C für die Dauer von neun Minuten getempert, wobei das Harz in den B-Zustand überführt und angeliert wurde.

Anschließend wurde diese Platte noch warm in das auf 150 °C vorgeheizte Formwerkzeug eingelegt und in die Form gepreßt. Die mit Antihaftmittel beschichtete Preßform blieb fünf Minuten geschlossen, wurde dann geöffnet und der inzwischen ausgehärtete Körper aus der Preßform entnommen.
Auch in diesem Beispiel wurde durch das Pressen kein im B-Zustand befindliches Harz aus dem imprägnierten Körper herausgequetscht, so daß sich an der Oberfläche des Formkörpers keine geschlossene Harzschicht ansammelte und der Formkörper keinerlei elektrisch isolierend wirkende Oberflächenzone zeigte.

### Beispiel 6 (Vergleich, Stand der Technik)

Bei diesem Beispiel wird bewußt ein lösungsmittelhaltiges Epoxidharzsystem zum Imprägnieren verwendet. Es wurde die folgende Zusammensetzung des Harzsystems gewählt:
75 Teile der Epoxidharzsysteme 2 (siehe Beispiel 1) mit den Hauptkomponenten Bisphenol-F-diglycidylether und Methylhexahydrophthalsäureanhydrid ohne latenten Katalysator und
25 Teile 2-Butanon (Lösungsmittel)

Die Viskosität dieses lösungsmittelhaltigen Harzsystems betrug bei Raumtemperatur 15 mPa·s. Das Vorprodukt hatte eine Rohdichte von 1,0 g/cm³, eine Plattendicke von 1 mm und einen Aschewert von kleiner 2 Gew.-%. Die Vakuumimprägnierung wurde wie in Beispiel 1, jedoch nicht bei 50°C sondern bei Raumtemperatur durchgeführt. Nach einer Imprägnierdauer von 6,5 Stunden wurde die nun imprägnierte Platte aus dem Bad genommen und nach Abwischen des oberflächlich anhaftenden Harzes gewogen. Der Harzgehalt betrug im nicht gehärteten Zustand 23 Gew.-%.

Die imprägnierte Platte wurde dann in einen vorgeheizten Umluftofen mit einer Temperatur von 150°C gebracht und nach 30 Minuten Härtedauer aus dem Ofen entnommen. Die Platte war dann von unterschiedlich großen Blasen übersät und völlig unbrauchbar! Es konnte an ihr weder ein Durchgangswiderstand noch eine Heliumpermeabilität bestimmt werden.
Die gehärtete und mit Blasen übersäte Platte zeigte eine deutliche Gewichtsabnahme gegenüber dem frisch imprägnierten Zustand. Der Harzgehalt hatte sich durch die Härtebehandlung von 23 % im nicht gehärteten Zustand auf 17,8 % im gehärteten Zustand reduziert. Dies konnte an den Proben der Beispiele 1 bis 5, in denen lösungsmittelfreie Harzsysteme eingesetzt worden waren, nicht beobachtet werden. Der Gewichtsverlust war in diesem Beispiel 6 auf das Verdampfen des Lösungsmittels zurückzuführen. Da das Verdampfen des Lösungsmittels nicht nur an der Oberfläche des imprägnierten Körpers stattfand sondern auch im Innern des Körpers und das Entweichen durch darüberliegende Materialschichten behindert wurde, wurden die Blasen aufgetrieben.
Würde man eine mit lösungsmittelhaltigem Harzsystem imprägnierte Platte in einem Formwerkzeug pressen und aushärten - wie in Beispiel 4 für lösungsmittelfreie Harzsysteme beschrieben -, so würden die Schwierigkeiten noch weiter vergrößert, weil die freigesetzten Lösungsmitteldämpfe nicht ungehindert entweichen könnten und dadurch vermehrt und in unkontollierbarer Weise Fehlstellen und Blasen in dem Körper entstünden. Eine Herstellung eines geformten und mit einem lösungsmittelhaltigen Harz imprägnierten Körpers durch weiteres Verdichten in einer Pressvorrichtung und nachfolgendes Aushärten ist ohne massive Qualitätsminderung des gewünschten Endprodukts in tragbaren Herstellungszeiten nicht möglich.

Der Vergleich des Beispiels 6 mit den Beispielen 1 bis 5 verdeutlicht in eindeutiger Weise den Fortschritt, der mit der erfindungsgemäßen Lösung erreicht worden ist.

## Patentansprüche

1. Imprägnierter Körper aus expandiertem Graphit oder aus mindestens teilweise wieder verdichtetem expandiertem Graphit,
dessen Poren ein lösungsmittelfreies niedrigviskoses lagerstabiles Harzsystem aus der Gruppe der Isocyanate mit ihren Reaktionspartnern und/oder Epoxidharze oder durch Härten solcher Harzsysteme erhaltene Polymere enthalten,
**dadurch gekennzeichnet, dass**
der expandierte oder mindestens teilweise wieder verdichtete expandierte Graphit eine Dichte im Bereich von 0,3 g/cm³ bis 1,8 g/cm³ hat und der Gewichtsanteil der Harze aus der Gruppe der Isocyanate, Isocyanurate, Urethane oder Polyurethane oder/und Epoxide an dem imprägnierten Körper bis zu 50 % beträgt.

2. Imprägnierter Körper aus expandiertem Graphit oder aus mindestens teilweise wieder verdichtetem expandiertem Graphit nach Anspruch 1,
**dadurch gekennzeichnet, dass**
der expandierte oder mindestens teilweise wieder verdichtete expandierte Graphit eine Dichte im Bereich von 0,3 g/cm³ bis 1,5 g/cm³ hat.

3. Imprägnierter Körpern aus expandiertem Graphit oder aus mindestens teilweise wieder verdichtetem expandiertem Graphit nach Anspruch 1 oder 2,
**dadurch gekennzeichnet, dass**
der imprägnierte Graphitkörper 5 bis 25 Gew% Harz aus der Gruppe der Isocyanate, Isocyanurate, Urethane oder Polyurethane oder/und Epoxide enthält.

4. Imprägnierter Körper aus expandiertem Graphit oder aus mindestens teilweise wieder verdichtetem expandiertem Graphit nach einem der Ansprüche 1 bis 3,
**dadurch gekennzeichnet, dass**
dieser Körper zwei jeweils für sich zusammenhaltende Netzwerke aufweist, von denen das eine aus einem zusammenhängenden Gerüst aus Graphit und das andere aus in dem die Poren eingedrungenen Harz oder daraus durch Härtung entstandenen Polymer besteht.

5. Imprägnierter Körper aus expandiertem Graphit oder aus mindestens teilweise wieder verdichtetem expandiertem Graphit nach einem der Ansprüche 1 bis 4,
**dadurch gekennzeichnet, dass**
dieser Körper an seiner Oberfläche keinen geschlossenen Harzfilm enthält.

6. Imprägnierter Körper aus expandiertem Graphit oder aus mindestens teilweise wieder verdichtetem expandiertem Graphit nach einem der Ansprüche 1 bis 5,
**dadurch gekennzeichnet, dass**
der expandierte Graphit oder mindestens teilweise wieder verdichtete expandierte Graphit keramische oder mineralische Füllstoffe enthält.

7. Imprägnierter Körper aus expandiertem Graphit oder aus mindestens teilweise wieder verdichtetem expandiertem Graphit nach einem oder mehreren der Ansprüche 1 bis 6,
**dadurch gekennzeichnet, dass**
dieser Körper lediglich in oberflächennahen Zonen Harzsysteme aus der Gruppe der Isocyanate und ihren Reaktionspartnern oder/und Epoxide enthält.

8. Imprägnierter Körper aus expandiertem Graphit oder aus mindestens teilweise wieder verdichtetem expandiertem Graphit nach einem oder mehreren der Ansprüche 1 bis 7,
**dadurch gekennzeichnet, dass**
dieser Körper aus einer der in Anspruch 1 genannten Gruppen von Harzen entstandene ausgehärtete Polymerharzsysteme enthält.

9. Imprägnierter Körper aus expandiertem Graphit oder aus mindestens teilweise wieder verdichtetem expandiertem Graphit nach Anspruch 8,
**dadurch gekennzeichnet, dass**
seine Permeabilität für Helium nicht mehr als 0,07 mg/m²*s beträgt bei einseitiger Beaufschlagung mit Helium mit einem Überdruck von 1 bar.

10. Imprägnierter Körper aus expandiertem Graphit oder aus mindestens teilweise wieder verdichtetem expandiertem Graphit nach einem der Ansprüche 1 bis 9,
**dadurch gekennzeichnet, dass**
das Harzsystem ein Epoxidharzsytem ist, welches Bisphenol-A-diglycidylether oder Bisphenol-F-diglycidylether enthält.

11. Imprägnierter Graphitkörper nach einem oder mehreren der Ansprüche 1 bis 10,
**dadurch gekennzeichnet, dass**
das Harzsystem ein Epoxidharzsystem ist, welches Methylhexahydrophthalsäureanhydrid enthält

12. Imprägnierter Körper aus expandiertem Graphit oder aus mindestens teilweise wieder verdichtetem expandiertem Graphit nach einem der Ansprüche 1 bis 11
**dadurch gekennzeichnet, dass**
die imprägnierten Körper Harzsysteme aus der Gruppe der Epoxide enthalten, die bei 50 °C über eine Dauer von mehr als zwei Tagen eine Viskosität von unter 200 mPa*s aufweisen.

13. Imprägnierter Körper aus expandiertem Graphit oder aus mindestens teilweise wieder verdichtetem expandiertem Graphit nach Anspruch 12,
**dadurch gekennzeichnet, dass**
die imprägnierten Körper Harzsysteme aus der Gruppe der Epoxide enthalten, die bei 50 °C über eine Dauer von mehr als zwei Tagen eine Viskosität von unter 150 mPa*s aufweisen.

14. Imprägnierte Körper aus expandiertem Graphit oder aus mindestens teilweise wieder verdichtetem expandiertem Graphit nach einem der Ansprüche 1 bis 9,
**dadurch gekennzeichnet, dass**
das Harzsystem ein Isocyanat-Harzsystem ist, welches Diphenylmethandiisocyanat enthält.

15. Imprägnierter Körper aus expandiertem Graphit oder aus mindestens teilweise wieder verdichtetem expandiertem Graphit nach Anspruch 14,
**dadurch gekennzeichnet, dass**
das Harzsystem ein Isocyanat-Harzsystem aus Diphenylmethandiisocyanat und Bis(4,4'-glycidyloxyphenyl)-propan ist.

16. Imprägnierter Körper aus expandiertem Graphit oder aus mindestens teilweise wieder verdichtetem expandiertem Graphit nach einem der Ansprüche 1 bis 9, 14 und 15,
**dadurch gekennzeichnet, dass**
die Harzsysteme aus der Gruppe der Isocyanate mit ihren Reaktionspartnern in dem mit einem dieser Harzsysteme imprägnierten Körper bei Raumtemperatur eine Lagerstabilität von mehr als zwei Tagen aufweisen.

17. Verfahren zur Herstellung eines imprägnierten Körper aus expandiertem Graphit oder aus mindestens teilweise wieder verdichtetem expandiertem Graphit nach Anspruch 1, umfassend die Schritte
a) Her- oder Bereitstellen eines Körper aus expandiertem oder mindestens teilweise wieder verdichtetem expandiertem Graphit mit offenem Porensystem als Vorprodukt,
b) Imprägnieren dieses Vorproduktes mit mindestens einem lösungsmittelfreien, niedrigviskosen und polymerisierbaren Harzsystem aus der Gruppe der Isocyanate und ihren Reaktionspartnern oder/und Epoxide
c) Überführen des Harzes in den B-Zustand
d) Weiterverarbeitung des Zwischenprodukts mit im B-Zustand befindlichen Harz zu einem Formkörper oder belassen des Zwischenprodukts in der ursprünglichen Form
e) Härtungsbehandlung des Harzsystems
**dadurch gekennzeichnet, dass**
das im Schritt a) her- oder bereitgestellte Vorprodukt eine Dichte im Bereich von 0,3 g/cm³ bis 1,8 g/cm³ aufweist.

18. Verfahren nach Anspruch 17, **dadurch gekennzeichnet, dass**
das Vorprodukt aus expandiertem und mindestens teilweise wieder verdichtetem expandiertem Graphit beim Imprägniervorgang bis zu 100 % seines Eigengewichtes an Isocyanat- und/oder Epoxid-Harzsystemen aufnimmt.

19. Verfahren nach Anspruch 18, **dadurch gekennzeichnet, dass**
das Vorprodukt aus expandiertem und mindestens teilweise wieder verdichtetem expandiertem Graphit beim Imprägniervorgang 5 bis 35 % seines Eigengewichtes an Isocyanat- und/oder Epoxid-Harzsystemen aufnimmt

20. Verfahren nach einem oder mehreren der Ansprüche 17 bis 19,
**dadurch gekennzeichnet, dass**
das Vorprodukt aus expandiertem oder aus expandiertem und mindestens teilweise wieder verdichtetem expandiertem Graphit einen Aschewert von nicht mehr als 4 Gew% aufweist.

21. Verfahren zur Herstellung eines mindestens ein Kunstharz enthaltenden Körpers nach einem oder mehreren der Patentansprüchen 17 bis 20, **dadurch gekennzeichnet, dass**
der expandierte Graphit mit keramischen, elektrisch nicht leitfähigen oder elektrisch leitfähigen Füllstoffen gemischt, zu einem füilstoffhaltigen Vorprodukt verarbeitet wird und dann mit Harz imprägniert wird.

22. Verfahren zur Herstellung eines mindestens ein Kunstharz enthaltenden Körpers nach einem oder mehreren der Patentansprüche 17 bis 21, **dadurch gekennzeichnet, dass** Epoxidharzsysteme eingesetzt werden, die bei 50 °C eine Viskosität unter 100 mPa*s, aufweisen.

23. Verfahren zur Herstellung eines mindestens ein Kunstharz enthaltenden Körpers nach einem oder mehreren der Patentansprüche 17 bis 21, **dadurch gekennzeichnet, dass** Isocyanat-Harze mit ihren Reaktionspartnern eingesetzt werden, die bei Raumtemperatur eine Viskosität von unter 100 mPa*s aufweise,

24. Verfahren nach einem oder mehreren der Patentansprüche 17 bis 23,
**dadurch gekennzeichnet, dass**
der imprägnierte Körper gleichzeitig geformt und thermisch gehärtet wird.

25. Verfahren nach einem oder mehreren der Patentansprüche 17 bis 23,
**dadurch gekennzeichnet, dass**
die Harzsysteme aus der Gruppe Isocyanate mit ihren Reaktionspartnern oder/und aus der Gruppe der Epoxide in dem mit Harz imprägnierten Körper unter der Einwirkung von Temperaturen zwischen 120 und 180 °C in Zeiträumen von weniger als vierzig Stunden bis herunter zu weniger als vierundzwanzig Stunden ausgehärtet werden, wobei der niedrigen Temperatur die lange Härtezeit und umgekehrt der hohen Temperatur die kurze Härtezeit zuzuordnen ist.

26. Verfahren nach einem oder mehreren der Patentansprüche 17 bis 23,
**dadurch gekennzeichnet, dass**
die verwendeten Harzsysteme einen latenten Katalysator enthalten.

27. Verfahren nach Anspruch 26, **dadurch gekennzeichnet, dass**
die latent katalysierten Harzsysteme aus der Gruppe der Isocyanate oder Epoxide in dem mit den Harzen imprägnierten Körper unter der Einwirkung von Temperaturen zwischen 120 und 180 °C in Zeiträumen von weniger als zwei Stunden bis herunter zu weniger als 15 Minuten ausgehärtet werden, wobei der niedrigen Temperatur die lange Härtezeit und umgekehrt der hohen Temperatur die kurze Härtezeit zuzuordnen ist.

28. Verwendung von imprägnierten Körpern aus expandiertem Graphit oder aus mindestens teilweise wieder verdichtetem expandiertem Graphit nach den vorgenannten Patentansprüchen als Dichtungselemente, als Komponenten in Brennstoffzellen oder als Wärmeleitelemente.

## Claims

1. An impregnated body made of expanded graphite or at least partially recompressed expanded graphite, the pores of which contain a solvent-free, low-viscosity, storage-stable resin system from the group of the isocyanates with their co-reactants and/or of the epoxy resins or polymers obtained by curing such resin systems, **characterised in that** the expanded or at least partially recompressed expanded graphite has a density in the range from 0.3 g/cm³ to 1.8 g/cm³ and the proportion by weight of the resins from the group of the isocyanates, isocyanurates, urethanes or polyurethanes or/and epoxides in the impregnated body is up to 50%.

2. An impregnated body made of expanded graphite or at least partially recompressed expanded graphite according to claim 1, **characterised in that** the expanded or at least partially recompressed expanded graphite has a density in the range from 0.3 g/cm³ to 1.5 g/cm³.

3. An impregnated body made of expanded graphite or at least partially recompressed expanded graphite according to claim 1 or 2, **characterised in that** the impregnated graphite body contains 5 to 25% by weight of resin from the group of the isocyanates, isocyanurates, urethanes or polyurethanes or/and epoxides.

4. An impregnated body made of expanded graphite or at least partially recompressed expanded graphite according to one of claims 1 to 3, **characterised in that** this body has at least two networks each held together independently, one of which consists of a connected framework made of graphite and the other of which consists of resin which has penetrated into the pores, or polymer formed therefrom by curing.

5. An impregnated body made of expanded graphite or at least partially recompressed expanded graphite according to one of claims 1 to 4, **characterised in that** this body does not contain a continuous resin film at its surface.

6. An impregnated body made of expanded graphite or at least partially recompressed expanded graphite according to one of claims 1 to 5, **characterised in that** the expanded or at least partially recompressed expanded graphite contains ceramic or mineral fillers.

7. An impregnated body made of expanded graphite or at least partially recompressed expanded graphite according to one or more of claims 1 to 6, **characterised in that** this body contains, merely in regions close to the surface, resin systems from the group of the isocyanates and their co-reactants or/and of the epoxides.

8. An impregnated body made of expanded graphite or at least partially recompressed expanded graphite according to one or more of claims 1 to 7, **characterised in that** this body contains cured polymer resin systems formed from one of the groups of resins mentioned in claim 1.

9. An impregnated body made of expanded graphite or at least partially recompressed expanded graphite according to claim 8, **characterised in that** its permeability to helium is not more than 0.07 mg/m^{2*}s when unilaterally exposed to helium at an overpressure of 1 bar.

10. An impregnated body made of expanded graphite or at least partially recompressed expanded graphite according to one of claims 1 to 9, **characterised in that** the resin system is an epoxy resin system which contains bisphenol-A-diglycidyl ether or bisphenol-F-diglycidyl ether.

11. An impregnated body according to one or more of claims 1 to 10, **characterised in that** the resin system is an epoxy resin system which contains methylhexahydrophthalic anhydride.

12. An impregnated body made of expanded graphite or at least partially recompressed expanded graphite according to one of claims 1 to 11, **characterised in that** the impregnated bodies contain resin systems from the group of the epoxides which, over a period of more than two days, have a viscosity at 50°C of less than 200 mPa*s.

13. An impregnated body made of expanded graphite or at least partially recompressed expanded graphite according to claim 12, **characterised in that** the impregnated bodies contain resin systems from the group of the epoxides which, over a period of more than two days, have a viscosity at 50°C of less than 150 mPa*s.

14. An impregnated body made of expanded graphite or at least partially recompressed expanded graphite according to one of claims 1 to 9, **characterised in that** the resin system is an isocyanate resin system which contains diphenylmethane diisocyanate.

15. An impregnated body made of expanded graphite or at least partially recompressed expanded graphite according to claim 14, **characterised in that** the resin system is an isocyanate resin system comprising diphenylmethane diisocyanate and bis (4,4' - glycidyloxyphenyl)propane.

16. An impregnated body made of expanded graphite or at least partially recompressed expanded graphite according to one of claims 1 to 9, 14 and 15, **characterised in that** the resin systems from the group of the isocyanates with their co-reactants in the body impregnated with one of these resin systems have a storage stability at room temperature of more than two days.

17. A process for producing an impregnated body made of expanded graphite or at least partially recompressed expanded graphite according to claim 1, comprising the steps
a) producing or providing a body made of expanded or at least partially recompressed expanded graphite with an open pore system as primary product,
b) impregnating this primary product with at least one solvent-free, low-viscosity and polymerisable resin system from the group of the isocyanates and their co-reactants or/and of the epoxides,
c) converting the resin into the B state,
d) further processing the intermediate product with resin in the B state to form a shaped body or leaving the intermediate product in the original form,
e) curing treatment of the resin system,
**characterised in that** the primary product produced or provided in step a) has a density in the range from 0.3 g/cm³ to 1.8 g/cm³.

18. A process according to claim 17, **characterised in that** the primary product made of expanded and at least partially recompressed expanded graphite takes up, during the impregnating operation, up to 100% by weight of its own weight of isocyanate and/or epoxy resin systems.

19. A process according to claim 18, **characterised in that** the primary product made of expanded and at least partially recompressed expanded graphite takes up, during the impregnating operation, 5 to 35% by weight of its own weight of isocyanate and/or epoxy resin systems.

20. A process according to one or more of claims 17 to 19, **characterised in that** the primary product made of expanded or of expanded and at least partially recompressed expanded graphite has an ash value of not more than 4% by weight.

21. A process for producing a body containing at least one synthetic resin according to one or more of claims 17 to 20, **characterised in that** the expanded graphite is mixed with ceramic, electrically non-conductive or electrically conductive fillers, is processed to form a filler-containing primary product and is then impregnated with resin.

22. A process for producing a body containing at least one synthetic resin according to one or more of claims 17 to 21, **characterised in that** epoxy resin systems which have a viscosity at 50°C of less than 100 mPa*s are employed.

23. A process for producing a body containing at least one synthetic resin according to one or more of claims 17 to 21, **characterised in that** isocyanate resins with their co-reactants which have a viscosity at room temperature of less than 100 mPa*s are employed.

24. A process according to one or more of claims 17 to 23, **characterised in that** the impregnated body is simultaneously shaped and thermally cured.

25. A process according to one or more of claims 17 to 23, **characterised in that** the resin systems from the group of the isocyanates with their co-reactants or/and from the group of the epoxides in the body impregnated with resins are cured in periods of time of less than forty hours down to less than twenty-four hours under the effect of temperatures between 120 and 180°C, where the long curing time is to be assigned to the low temperature and conversely the short curing time is to be assigned to the high temperature.

26. A process according to one or more of claims 17 to 23, **characterised in that** the resin systems used contain a latent catalyst.

27. A process according to claim 26, **characterised in that** the latently catalysed resin systems from the group of the isocyanates or epoxides in the body impregnated with the resins are cured in periods of time of less than two hours down to less than 15 minutes under the effect of temperatures between 120 and 180°C, where the long curing time is to be assigned to the low temperature and conversely the short curing time is to be assigned to the high temperature.

28. Use of impregnated bodies made of expanded graphite or at least partially recompressed expanded graphite according to the aforementioned claims as sealing elements, as components in fuel cells or as heat-conducting elements.

## Revendications

1. Corps imprégné en graphite expansé ou en graphite expansé au moins partiellement re-comprimé,
dont les pores contiennent un système de résines sans solvant, peu visqueux, stable au stockage appartenant au groupe des isocyanates avec leurs partenaires de réaction et/ou des résines époxydes, ou des polymères obtenus par durcissement de systèmes de résines de ce genre,
**caractérisé en ce que**
le graphite expansé ou au moins partiellement re-comprimé possède une masse volumique située entre 0,3 g/cm³ et 1,8 g/cm³ et la proportion en poids des résines appartenant au groupe des isocyanates, isocyanurates, uréthanes ou polyuréthanes et/ou époxydes, dans le corps imprégné, atteint jusqu'à 50 %.

2. Corps imprégné en graphite expansé ou en graphite expansé au moins partiellement re-comprimé, selon la revendication 1,
**caractérisé en ce que**
le graphite expansé ou au moins partiellement re-comprimé possède une masse volumique située entre 0,3 g/cm³ et 1,5 g/cm³.

3. Corps imprégné en graphite expansé ou en graphite expansé au moins partiellement re-comprimé, selon la revendication 1 ou 2
**caractérisé en ce que**
le corps en graphite imprégné contient 5 à 25 % en poids de résine appartenant au groupe des isocyanates, isocyanurates, uréthanes ou polyuréthanes et/ ou époxydes.

4. Corps imprégné en graphite expansé ou en graphite expansé au moins partiellement re-comprimé, selon une des revendications 1 à 3,
**caractérisé en ce que**
ce corps présente deux réseaux cohérents, dont un est constitué d'une charpente cohérente en graphite et l'autre est constitué de résine qui a pénétré dans les pores ou de polymère formé par durcissement de celle-ci.

5. Corps imprégné en graphite expansé ou en graphite expansé au moins partiellement re-comprimé, selon une des revendications 1 à 4,
**caractérisé en ce que**
ce corps ne contient pas de film de résine fermé sur sa surface.

6. Corps imprégné en graphite expansé ou en graphite expansé au moins partiellement re-comprimé, selon une des revendications 1 à 5,
**caractérisé en ce que**
le graphite expansé ou le graphite expansé au moins partiellement re-comprimé contient des charges céramiques ou minérales.

7. Corps imprégné en graphite expansé ou en graphite expansé au moins partiellement re-comprimé, selon une ou plusieurs des revendications 1 à 6,
**caractérisé en ce que**
ce corps contient seulement dans les zones proches de la surface des systèmes de résines appartenant au groupe des isocyanates et de leurs partenaires de réaction et/ou des époxydes.

8. Corps imprégné en graphite expansé ou en graphite expansé au moins partiellement re-comprimé, selon une ou plusieurs des revendications 1 à 7,
**caractérisé en ce que**
ce corps contient des systèmes de résines polymères durcis formés à partir d'un des groupes de résines cités dans la revendication 1.

9. Corps imprégné en graphite expansé ou en graphite expansé au moins partiellement re-comprimé, selon la revendications 8,
**caractérisé en ce que**
sa perméabilité pour l'hélium n'est pas supérieure à 0,07 mg/m^{2*}s dans le cas d'une exposition d'un seul côté à de l'hélium sous une surpression de 1 bar.

10. Corps imprégné en graphite expansé ou en graphite expansé au moins partiellement re-comprimé, selon une ou plusieurs des revendications 1 à 9,
**caractérisé en ce que**
le système de résines est un système de résines époxydes qui contient de l'éther bisphénol-A-diglycidylique ou de l'éther bisphényl-F-diglycidylique.

11. Corps imprégné en graphite expansé ou en graphite expansé au moins partiellement re-comprimé, selon une ou plusieurs des revendications 1 à 10,
**caractérisé en ce que**
le système de résines est un système de résines époxydes qui contient de l'anhydride de l'acide méthylhexahydrophtalique.

12. Corps imprégné en graphite expansé ou en graphite expansé au moins partiellement re-comprimé, selon une ou plusieurs des revendications 1 à 11,
**caractérisé en ce que**
les corps imprégnés contiennent des systèmes de résines appartenant au groupes des époxydes qui présentent à 50 °C, pendant une durée de plus de deux jours, une viscosité inférieure à 200 mPa*s.

13. Corps imprégné en graphite expansé ou en graphite expansé au moins partiellement re-comprimé, selon la revendication 12,
**caractérisé en ce que**
les corps imprégnés contiennent des systèmes de résines appartenant au groupe des époxydes qui présentent à 50 °C, pendant une durée de plus de deux jours, une viscosité inférieure à 150 mPa*s.

14. Corps imprégné en graphite expansé ou en graphite expansé au moins partiellement re-comprimé, selon une des revendications 1 à 9,
**caractérisé en ce que**
le système de résines est un système de résines d'isocyanates qui contient du diisocyanate de diphénylméthane.

15. Corps imprégné en graphite expansé ou en graphite expansé au moins partiellement re-comprimé, selon la revendication 14,
**caractérisé en ce que**
le système de résines est un système de résines d'isocyanates constitué de diisocyanate de diphénylméthane et de bis(4,4'-glycidyloxyphényl)-propane.

16. Corps imprégné en graphite expansé ou en graphite expansé au moins partiellement re-comprimé, selon une des revendications 1 à 9, 14 et 15,
**caractérisé en ce que**
les systèmes de résines appartenant au groupe des isocyanates avec leurs partenaires de réaction présentent dans le corps imprégné avec un de ces systèmes de résines, à la température ambiante, une stabilité au stockage de plus de deux jours.

17. Procédé pour la fabrication d'un corps imprégné en graphite expansé ou en graphite expansé au moins partiellement re-comprimé, selon la revendication 1,
comprenant les étapes suivantes :
a) préparation ou mise à disposition d'un corps en graphite expansé ou en graphite expansé au moins partiellement re-comprimé avec un système de pores ouverts comme avant-produit,
b) imprégnation de cet avant-produit avec au moins un système de résines sans solvant, peu visqueux et polymérisable, appartenant au groupe des isocyanates et de leurs partenaires de réaction et/ou des époxydes,
c) conversion de la résine dans l'état B,
d) traitement du produit intermédiaire avec la résine se trouvant dans l'état B pour former un corps façonné ou maintien du produit intermédiaire sous la forme d'origine,
e) traitement de durcissement du système de résines,
**caractérisé en ce que**
l'avant - produit préparé ou mis à disposition dans l'étape a) présente une masse volumique entre 0,3 g/cm³ et 1,8 g/cm³.

18. Procédé selon la revendication 17,
**caractérisé en ce que**
l'avant - produit en graphite expansé ou expansé au moins partiellement re-comprimé absorbe, au cours de l'imprégnation, jusqu'à 100 % de son propre poids de systèmes de résines d'isocyanates et/ou époxydes.

19. Procédé selon la revendication 18,
**caractérisé en ce que**
l'avant - produit en graphite expansé ou expansé au moins partiellement re-comprimé absorbe, au cours de l'imprégnation, 5 à 35 % de son propre poids de systèmes de résines d'isocyanates et/ou époxydes.

20. Procédé selon ou plusieurs des revendications à 17 à 19,
**caractérisé en ce que**
l'avant - produit en graphite expansé ou expansé au moins partiellement re-comprimé présente un indice de cendres non supérieur à 4 % en poids.

21. Procédé pour la production d'un corps contenant au moins une résine synthétique selon une ou plusieurs des revendications à 17 à 20,
**caractérisé en ce que**
le graphite expansé est mélangé avec des charges céramiques, non électriquement conductrices ou électriquement conductrices, transformé en un avant - produit chargé, puis imprégné avec de la résine.

22. Procédé pour la production d'un corps contenant au moins une résine synthétique selon une ou plusieurs des revendications à 17 à 21,
**caractérisé en ce qu'**
on utilise des systèmes de résines époxydes qui possèdent à 50 °C une viscosité inférieure à 100 mPa*s.

23. Procédé pour la production d'un corps contenant au moins une résine synthétique selon une ou plusieurs des revendications à 17 à 21,
**caractérisé en ce qu'**
on utilise des résines d'isocyanates avec leurs partenaires de réaction, qui présentent à la température ambiante une viscosité inférieure à 100 mPa*s.

24. Procédé selon une ou plusieurs des revendications à 17 à 23,
**caractérisé en ce que**
le corps imprégné est en même temps façonné et thermiquement durci.

25. Procédé selon une ou plusieurs des revendications à 17 à 23,
**caractérisé en ce que**
les systèmes de résines appartenant au groupe des isocyanates avec leurs partenaires de réaction et/ou au groupe des époxydes sont durcis dans le corps imprégné de résine sous l'action de températures situées entre 120 et 180 °C au cours de périodes inférieures à 40 heures jusqu'à moins de 24 heures, la température basse devant correspondre au temps de durcissement long et, inversement, la température élevée devant correspondre au temps de durcissement court.

26. Procédé selon une ou plusieurs des revendications à 17 à 23,
**caractérisé en ce que**
les systèmes de résines utilisés contiennent un catalyseur latent.

27. Procédé selon la revendication 26,
**caractérisé en ce que**
les systèmes de résines comportant un catalyseur latent, appartenant au groupe des isocyanates ou des époxydes sont durcis dans le corps imprégné avec les résines sous l'effet de températures situées entre 120 et 180 °C, au cours de périodes inférieures à 2 heures jusqu'à moins de 15 minutes, la température basse devant correspondre au temps de durcissement long et, inversement, la température élevée devant correspondre au temps de durcissement court.

28. Utilisation de corps imprégnés en graphite expansé ou en graphite expansé au moins partiellement re-comprimé selon les revendications précédentes, comme éléments d'étanchéité dans les piles à combustibles ou comme éléments thermo-conducteurs.
